# EUROPEAN PATENT APPLICATION

(11) **EP 1 619 397 A1**
(43) Date of publication of application: **25.01.2006**
(21) Application number: 05106545.6
(22) Date of filing: 15.07.2005
(51) Int. Cl.: F16B 7/14, F16B 7/04

(54) **CONNECTOR FOR TUBULAR ELEMENTS**

(30) Priority: 23.07.2004 IT BO20040459
(71) Applicant: Frabbi, Cesare, 40054 Mezzolara Di Budrio Bologna (IT)
(72) Inventor: Frabbi, Cesare, 40054 Mezzolara Di Budrio Bologna (IT)
(74) Representative: Modiano, Micaela Nadia

(57) **Abstract**

A connector for tubular elements, comprising an elongated body (2), which is provided with two ends (3) for insertion in the tubular elements (4); each end (3) is provided with a frustum-shaped outer thread (5), on which a bush (6) provided with a corresponding frustum-shaped internal thread (7) engages, and each end (3) has a stroke limiting tip element (3a) for the bushes (6).

## Description

The present invention relates to a connector for tubular elements.

Items of various kinds for home and gardening use are known, such as for example brooms, coat-hangers, rakes and the like, which are provided with modular handles constituted by a plurality of tubular elements, which are mutually mated in such a number as to obtain the required length.

The tip regions of these tubular elements are provided with shaped tapering portions, which allow their bayonet coupling, or with corresponding threads which allow their mutual fastening.

However, with normal use the tapering or threaded tip regions soon tend to undergo deformation; accordingly, the joining of the tubular elements occurs with play, causing such elements to flex proximate to the coupling portions, and causing in extreme cases the disengagement of one element from the other. Particularly for tubular elements with threaded tip regions, such regions may instead seize, subsequently preventing disassembly of the handle, to the detriment of its functionality.

Further, the handle is usually coated with paint, and since the tapering or threading processes, which are also rather expensive, are performed directly on already-painted tubular elements due to production requirements, the paint is often damaged, with consequent rejection of the part and corresponding economic loss.

Further, in normal use the paint in any case is damaged proximate to the tip regions of the tubular elements due to the mutual sliding that occurs during coupling operations.

The aim of the present invention is to solve the above-mentioned problems, by providing a connector for tubular elements that allows their rigid coupling so that they do not flex even after prolonged use and at the same time allows their rapid disassembly, without the possibility of unwanted seizing.

Within this aim, an object of the invention is to provide a connector which in no way can damage the paint coating of the tubular elements during normal use and during the operations for manufacturing the connector.

Another obj ect of the invention is to provide a connector that by way of its particular constructive characteristics is capable of giving the greatest assurances of reliability and safety in use.

Another object of the present invention is to provide a connector having a structure which is simple, relatively easy to provide in practice, effective in operation, and further competitive from an economic standpoint.

This aim and these and other obj ects that will become better apparent hereinafter are achieved by a connector for tubular elements, characterized in that it comprises an elongated body, which is provided with two ends for insertion in said tubular elements, each end being provided with a frustum-shaped outer thread, in that a bush is engaged on each one of said ends and is provided with a corresponding frustum-shaped internal thread, each one of said ends having a stroke limiting tip element for said bushes.

Further characteristics and advantages of the invention will become better apparent from the following detailed description of a preferred but not exclusive embodiment of a connector according to the invention, illustrated by way of non-limiting example in the accompanying drawings, wherein:

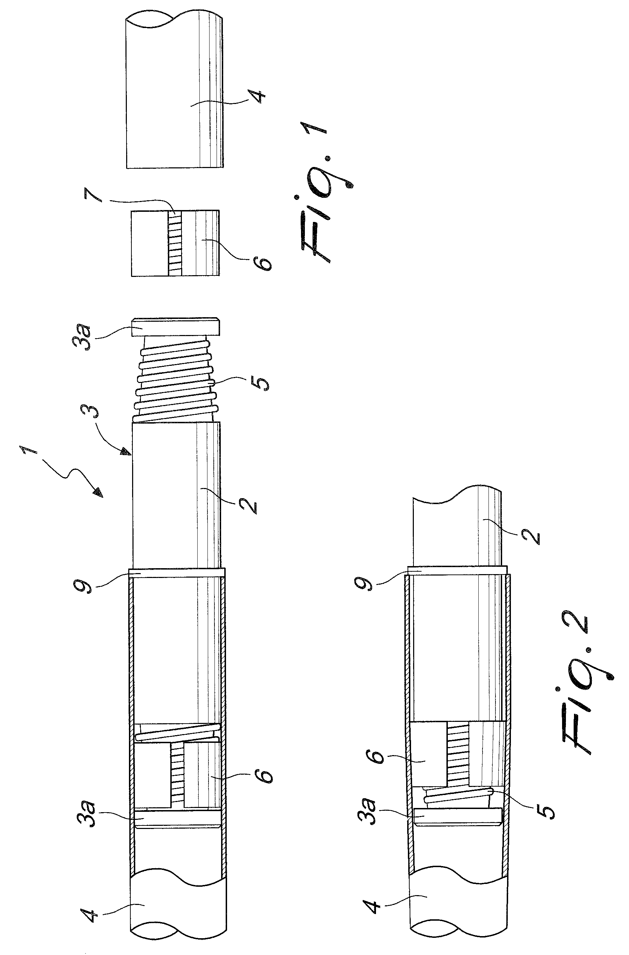

Figure 1 is a partially exploded front view of a connector inserted in a tubular element;
Figure 2 is a front view of a detail of the connector fastened in the tubular element;

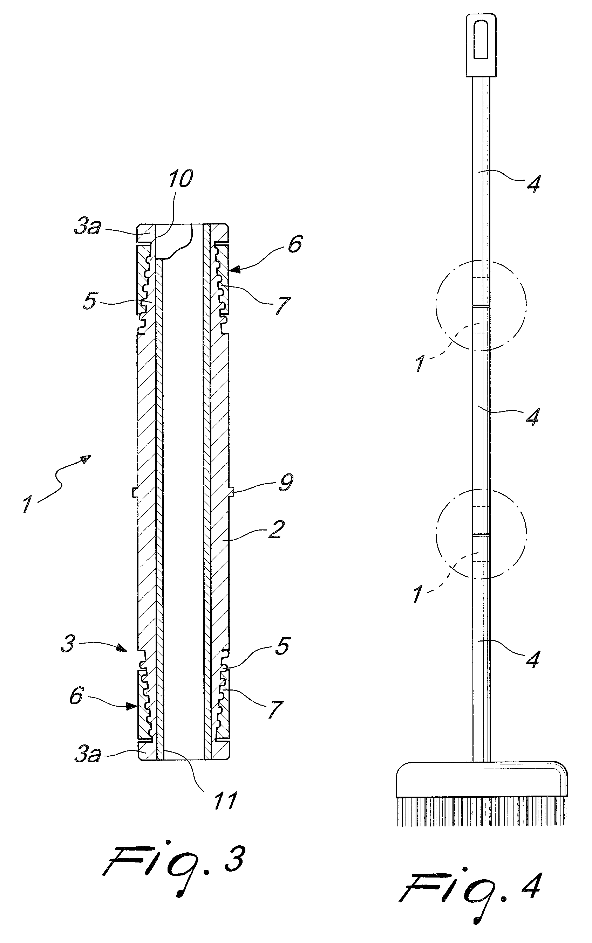

Figure 3 is a longitudinal sectional front view, taken along an axial plane, of the connector;
Figure 4 is a front view of a possible application of the connector.

With reference to the figures, the reference numeral 1 generally designates a connector for tubular elements according to the invention.

The connector 1 is constituted by a substantially cylindrical elongated body 2, which is provided with two ends 3 for insertion in tubular elements 4 to be connected; the outside diameter of the body 2 is substantially equal to the inside diameter of the tubular elements 4, in order to allow their mutual coupling. Each end 3 has a frustum-shaped outer thread 5, on which a respective bush 6 engages; such bush is provided with a corresponding frustum-shaped internal thread 7.

Each bush 6 is provided with a substantially longitudinal notch 8, which allows its elastic expansion in a radial direction when it is fastened onto the thread 5 of the corresponding end 3; further, each end 3 is provided with a stroke limiting tip element 3a for the corresponding bush 6.

In a central portion of the body 2 there is a stop shoulder for the tubular elements 4 to be connected, which is constituted for example by an annular collar 9 against which the end regions of the tubular elements 4 abut.

The body 2 is further crossed by a longitudinal through hole 10, in which there is generally a rigid shaft 11, which is rigidly coupled to the body 2, withstands flexing and is designed to increase the overall rigidity of the connector 1.

Considering for the sake of convenience a single end 3 of the connector 1, in practical operation the bush 6 is initially engaged on the portion of the thread 5 that has the smallest diameter, proximate to the tip element 3a: in this way, the outside diameter of the bush 6, not yet deformed by fastening onto the thread 5, is substantially equal to the inside diameter of the tubular element 4, which can thus slide along the end 3 until it abuts against the annular collar 9 of the body 2. In particular, the outer surface of the bush 6 is flush with the inner surface of the tubular element 4 and in contact with it.

At this point, in order to lock the tubular element 4 to the connector 1, it is sufficient to rotate it so that the bush 6, retained by sliding friction against the internal surface of the tubular element 4, rises along the frustum-shaped outer thread 5 of the end 3: by doing so, the bush 6 expands radially by way of the presence of the notch 8 and fastens firmly with interference against the internal surface of the tubular element 4, providing a rigid coupling thereof on the connector 1. In order to release the tubular element 4 again, it is sufficient to turn it in the opposite direction in order to cause the bush 6 to slide back against along the frustum-shaped outer thread 5, thus allowing the extraction of the tubular element 4 from the connector 1.

The connector 1 as described allows quick connection of the tubular elements 4 and at the same time allows their rapid disassembly.

Advantageously, the rigid shaft 11 accommodated in the longitudinal through hole 10 increases the overall rigidity of the connector 1.

Further, it is not necessary to provide on the ends 3 any machining after the painting of the tubular elements 4, with a double advantage, from an economic standpoint, in terms of machining costs and in terms of complete elimination of rejects due to damage to the paint coating.

Conveniently, only the internal surfaces of the tubular elements 4 are involved in the joining to the connector 1, and their outer paint coating therefore cannot be damaged during coupling operations.

Advantageously, the outer surface of the bush 6 may have a machining (for example a knurling) or a surface treatment suitable to increase its grip by friction against the internal surface of the tubular element 4.

In practice it has been found that the invention fully achieves the intended aim and objects.

The invention thus conceived is susceptible of numerous modifications and variations, all of which are within the scope of the appended claims; for example, one variation provides, on each end 3, a stroke limiting portion, which is externally smooth and comprised between the thread 5 and the stroke limiting element 3a and prevents the unfastened bush 6 from expanding as a consequence of forced abutment against the element 3a. All the details may further be replaced with other technically equivalent ones.

In the embodiments shown, individual characteristics, given in relation to specific examples, may actually be interchanged with other different characteristics that exist in other embodiments.

Moreover, it is noted that anything found to be already known during the patenting process is understood not to be claimed and to be the subject of a disclaimer.

The embodiment of the present invention shall be carried out in the most scrupulous compliance with the statutory and regulatory provisions related to the products of the invention or correlated thereto and following any required authorization of the corresponding competent authorities, with particular reference to regulations related to safety, environmental pollution and health.

In practice, the materials used, as well as the shapes and the dimensions, may be any according to requirements and to the state of the art without thereby abandoning the scope of the protection of the appended claims.

The disclosures in Italian Patent Application No. BO2004A000459 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A connector for tubular elements, **characterized in that** it comprises an elongated body (2), which is provided with two ends (3) for insertion in said tubular elements (4), each end being provided with a frustum-shaped outer thread (5), **in that** a bush (6) is engaged on each one of said ends (3) and is provided with a corresponding frustum-shaped internal thread (7), each one of said ends (3) having a stroke limiting tip element (3a) for said bushes (6).

2. The connector according to claim 1, **characterized in that** said bushes (6) have a substantially longitudinal notch (8) for their elastic expansion in a radial direction when they are fastened onto said frustum-shaped outer threads (5) of said ends (3).

3. The connector according to claim 1, **characterized in that** it is provided with at least one stop shoulder for the tip regions of said tubular elements (4).

4. The connector according to claim 3, **characterized in that** said stop shoulder is an annular collar (9) provided substantially in a central portion of said body (2).

5. The connector according to one or more of the preceding claims, **characterized in that** said body (2) is crossed by a longitudinal through hole (10).

6. The connector according to claim 5, **characterized in that** a rigid shaft (11), which withstands flexing, is provided in said hole (10) and is rigidly coupled to said body.

7. The connector according to claims 1 and 2, **characterized in that** each one of said ends (3) is provided with a stroke limiting portion for said bush (6), said stroke limiting portion being externally smooth and being adjacent to said frustum-shaped external thread (5).
